# EUROPEAN PATENT APPLICATION

(11) **EP 4 358 219 A1**
(43) Date of publication of application: **24.04.2024**
(21) Application number: 23740456.1
(22) Date of filing: 11.01.2023
(51) Int. Cl.: H01M 10/0567, H01M 10/0569, H01M 4/134, H01M 10/052

(54) **ELECTROCHEMICAL DEVICE**

(30) Priority: 11.01.2022 KR 20220004176
(71) Applicant: LG Energy Solution, Ltd., Seoul 07335 (KR)
(72) Inventor: LEE, Do-Joong, Daejeon 34122 (KR); KIM, Ki-Hyun, Daejeon 34122 (KR)
(74) Representative: Goddar, Heinz J.
(86) International application number: PCT/KR2023/000524
(87) International publication number: WO 2023/136612

(57) **Abstract**

Disclosed is an electrochemical device capable of preventing the exhaustion of a salt and additive in an electrolyte. The electrochemical device includes: a positive electrode; a lithium metal negative electrode; a separator interposed between the positive electrode and the negative electrode; and a non-aqueous electrolyte containing tin chloride (SnCh).

## Description

### TECHNICAL FIELD

The present disclosure relates to an electrochemical device. Particularly, the present disclosure relates to an electrochemical device which shows improved life characteristics by being prevented from the exhaustion of a salt and additive in an electrolyte.

The present application claims priority to Korean Patent Application No. 10-2022-0004176 filed on January 11, 2022 in the Republic of Korea, the disclosures of which are incorporated herein by reference.

### BACKGROUND ART

As energy storage technology has been given an increasing attention, the spectrum of application thereof has been expanded to cellular phones, tablets and laptop computers and camcorders, and even to energy for electric vehicles (EVs) and hybrid electric vehicles (HEVs), and research and development of electrochemical devices have been increased gradually. In this context, electrochemical devices have been most spotlighted. Recently, research and development of designing novel electrodes and batteries have been conducted in order to improve the capacity density and specific energy in developing such batteries.

Such an electrochemical device, particularly, a lithium metal secondary battery, such as a lithium-sulfur battery (Li-S battery), using lithium metal as a negative electrode has a significantly high theoretical capacity of 3,862 mAh/g and uses light lithium metal as a negative electrode active material, and thus has been spotlighted as a next-generation high-capacity battery. In the lithium-sulfur battery, reduction of sulfur and oxidation of lithium metal occur during discharge. Herein, sulfur forms lithium polysulfide (LiPS) having a linear structure from S₈ having a cyclic structure, and the lithium-sulfur battery is characterized in that it shows a phased discharge voltage until the polysulfide is reduced completely into Li₂S.

However, a lithium metal secondary battery, such as a lithium-sulfur battery, undergoes a decrease in charge/discharge efficiency during charge/discharge cycles due to the side reactions (deposition of byproducts caused by the decomposition of an electrolyte), unstability of lithium metal (growth of dendrite on a lithium metal negative electrode and generation of a short-circuit), or the like, resulting in degradation of the life of the battery.

Particularly, lithium metal used as a negative electrode active material easily forms large-area dendrite and reacts with a salt and additive in an electrolyte to form a solid electrolyte interphase (SEI) to cause continuous consumption of the salt and additive in the electrolyte, resulting in acceleration of the deterioration of the battery.

Therefore, there is a need for developing a technology for preventing the exhaustion of the salt and additive in the electrolyte so that lithium metal may be used as a negative electrode.

### DISCLOSURE

### Technical Problem

The present disclosure is designed to solve the problems of the related art, and therefore the present disclosure is directed to providing an electrochemical device capable of preventing the exhaustion of a salt and additive in an electrolyte.

### Technical Solution

In one aspect of the present disclosure, there is provided an electrochemical device according to any one of the following embodiments.

According to the first embodiment, there is provided an electrochemical device including: a positive electrode; a lithium metal negative electrode; a separator interposed between the positive electrode and the negative electrode; and a non-aqueous electrolyte containing tin chloride (SnCh).

According to the second embodiment, there is provided the electrochemical device as defined in the first embodiment, wherein the content of tin chloride is 0.5-5 wt% based on 100 wt% of the total weight of the non-aqueous electrolyte.

According to the third embodiment, there is provided the electrochemical device as defined in the first or the second embodiment, wherein the content of tin chloride is 1-4 wt% based on 100 wt% of the total weight of the non-aqueous electrolyte.

According to the fourth embodiment, there is provided the electrochemical device as defined in any one of the first to the third embodiments, wherein the lithium metal negative electrode includes a Li-Cl and Li-Sn alloy protective layer on the surface thereof.

According to the fifth embodiment, there is provided the electrochemical device as defined in any one of the first to the fourth embodiments, wherein the non-aqueous electrolyte further includes:
a first solvent including a heterocyclic compound having or not having at least one double bond, and containing at least one of oxygen and sulfur atoms;
a second solvent including at least one of an ether-based compound, an ester-based compound, an amide-based compound and a carbonate-based compound;
a lithium salt; and
lithium nitrate.

According to the sixth embodiment, there is provided the electrochemical device as defined in the fifth embodiment, wherein the lithium salt includes LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, lithium chloroborate, lithium C4 or lower aliphatic carboxylate, lithium 4-phenylborate, lithium imide, or two or more of them.

According to the seventh embodiment, there is provided the electrochemical device as defined in the fifth or the sixth embodiment, wherein the lithium salt has a concentration of 0.2-2.0 M.

According to the eighth embodiment, there is provided the electrochemical device as defined in any one of the fifth to the seventh embodiments, wherein the heterocyclic compound is a 3- to 15-membered cyclic compound non-substituted or substituted with at least one selected from the group consisting of a C1-C4 alkyl group, a C3-C8 cyclic alkyl group, a C6-C10 aryl group, a halogen group, a nitro group, an amine group and a sulfonyl group, or a polycyclic compound of at least one of a C3-C8 cyclic alkyl group and a C6-C10 aryl group with a heterocyclic compound.

According to the ninth embodiment, there is provided the electrochemical device as defined in any one of the fifth to the eighth embodiments, wherein the heterocyclic compound includes 1,3-dioxolane, 4,5-diethyl-dioxolane, 4,5-dimethyl-dioxolane, 4-methyl-1,3-dioxolane, 4-ethyl-1,3-dioxolane, 1,3-dioxane, 1,4-dioxane, 4-methyl-1,3-dioxane, 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimetylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or two or more of them.

According to the tenth embodiment, there is provided the electrochemical device as defined in any one of the fifth to the ninth embodiments, wherein the ether-based compound of the second solvent includes dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them.

According to the eleventh embodiment, there is provided the electrochemical device as defined in any one of the first to the tenth embodiments, wherein the non-aqueous electrolyte further includes lanthanum nitrate, potassium nitrate, cesium nitrate, magnesium nitrate, barium nitrate, lithium nitrite, potassium nitrite, cesium nitrite, or two or more of them.

According to the twelfth embodiment, there is provided the electrochemical device as defined in any one of the first to the eleventh embodiments, wherein the non-aqueous electrolyte further includes 1,3-dioxolane as the first solvent, dimethoxyethane as the second solvent, (CF₃SO₂)₂NLi as the lithium salt, and lithium nitrate.

According to the thirteenth embodiment, there is provided the electrochemical device as defined in any one of the first to the twelfth embodiments, which is a lithium-sulfur battery.

According to the fourteenth embodiment, there is provided the electrochemical device as defined in any one of the first to the twelfth embodiments, which is a lithium-lithium symmetric cell.

### Advantageous Effects

The electrochemical device according to an embodiment of the present disclosure includes tin chloride in the non-aqueous electrolyte, and thus can improve the lithium intercalation/deintercalation efficiency and can inhibit the growth of dendrite.

In addition, the electrochemical device according to an embodiment of the present disclosure includes tin chloride in the non-aqueous electrolyte, and thus can improve the lithium utilization efficiency and can increase the capacity and life of the electrochemical device.

The electrochemical device according to an embodiment of the present disclosure includes tin chloride in an amount of 0.5-4 wt% in the non-aqueous electrolyte, based on 100 wt% of the total weight of the non-aqueous electrolyte, and thus can improve the life of the electrochemical device with ease, while preventing the side reactions of tin chloride with the positive electrode active material.

The electrochemical device according to an embodiment of the present disclosure allows tin chloride contained in the non-aqueous electrolyte to react with the lithium metal negative electrode during the initial charge/discharge cycle, thereby forming a lithium-affinitive/highly ion conductive Li-Cl and Li-Sn alloy protective layer on the surface of the lithium metal negative electrode, thereby providing the electrochemical device with improved life.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a graph illustrating the interfacial resistance of the lithium-lithium symmetric cell obtained according to Example 2-1.
FIG. 2 is a graph illustrating the interfacial resistance of the lithium-lithium symmetric cell obtained according to Example 2-2.
FIG. 3 is a graph illustrating the interfacial resistance of the lithium-lithium symmetric cell obtained according to Example 2-3.
FIG. 4 is a graph illustrating the interfacial resistance of the lithium-lithium symmetric cell obtained according to Example 2-4.
FIG. 5 is a graph illustrating the interfacial resistance of the lithium-lithium symmetric cell obtained according to Example 2-5.
FIG. 6 is a graph illustrating the interfacial resistance of the lithium-lithium symmetric cell obtained according to Example 2-6.
FIG. 7 is a graph illustrating the interfacial resistance of the lithium-lithium symmetric cell obtained according to Comparative Example 2-1.
FIG. 8 is a graph illustrating the cycle life characteristics of the lithium-lithium symmetric cell obtained according to Example 2-1.
FIG. 9 is a graph illustrating the cycle life characteristics of the lithium-lithium symmetric cell obtained according to Example 2-2.
FIG. 10 is a graph illustrating the cycle life characteristics of the lithium-lithium symmetric cell obtained according to Example 2-3.
FIG. 11 is a graph illustrating the cycle life characteristics of the lithium-lithium symmetric cell obtained according to Example 2-4.
FIG. 12 is a graph illustrating the cycle life characteristics of the lithium-lithium symmetric cell obtained according to Example 2-5.
FIG. 13 is a graph illustrating the cycle life characteristics of the lithium-lithium symmetric cell obtained according to Example 2-6.
FIG. 14 is a graph illustrating the cycle life characteristics of the lithium-lithium symmetric cell obtained according to Comparative Example 2-1.
FIG. 15 is a graph illustrating the cycle life characteristics of the lithium-sulfur batteries obtained according to Examples 3-1 to 3-6 and Comparative Example 3-1.
FIG. 16 illustrates the surface of the lithium metal negative electrode, after the lithium-sulfur battery according to Example 3-3 is operated for 100 cycles.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided an electrochemical device including: a positive electrode; a lithium metal negative electrode; a separator interposed between the positive electrode and the negative electrode; and a non-aqueous electrolyte containing tin chloride (SnCh).

The positive electrode includes a positive electrode active material, a binder, a conductive material, or the like. The positive electrode active material may include one used conventionally in an electrochemical device, and particular examples thereof may include lithium nickel cobalt manganese compounds (lithium NCM-based compounds), elemental sulfur (S₈), sulfur-based compounds or a mixture thereof. Particularly, the sulfur-based compound may include Li₂Sₙ (n ≥ 1), organic sulfur compound, carbon-sulfur composite ((C₂Sₓ)ₙ, x = 2.5-50, n ≥ 2), or the like. In addition, the positive electrode active material may include a sulfur-carbon composite, and sulfur may be used in combination with a conductive material since it has no electrical conductivity in itself. The carbonaceous material (or carbon source) forming the sulfur-carbon composite may be any material used conventionally in the art and having a porous structure or a high specific surface area. Particular examples of the porous carbonaceous material may include, but are not limited to: graphite; graphene; carbon black, such as denka black, acetylene black, ketjen black, channel black, furnace black, lamp black or thermal black; carbon nanotubes, such as single-walled carbon nanotubes (SWCNTs) or multi-walled carbon nanotubes (MWCNTs); carbon fibers, such as graphite nanofibers (GNFs), carbon nanofibers (CNFs) or activated carbon fibers (ACFs); activated carbon; or two or more of them. In addition, the porous carbonaceous material is not particularly limited in its shape and may have a spherical, rod-like, needle-like, sheet-like, tubular or bulky shape, as long as it can be applied to an electrochemical device.

In addition, the carbonaceous material has pores, and the pores may show a porosity of 40-90% or 60-80%. When the porosity of the carbonaceous material satisfies the above-defined range, lithium ions may be transported sufficiently with ease, and the problem of degradation of the mechanical strength may be prevented with ease. The carbonaceous material may have a pore size of 10 nm to 5 µm, or 50 nm to 5 µm. When the pore size of the carbonaceous material satisfies the above-defined range, lithium-ion permeation may be accomplished with ease, and the problem of a battery short-circuit caused by the contact between the electrodes and safety-related problem may be prevented with ease.

The binder is an ingredient which assists the binding of the positive electrode active material with the conductive material, or the like, and the binding to a current collector. Particular examples of the binder may include but are not limited to: polyvinylidene fluoride (PVDF), polyvinylidene fluoride-co-hexafluoropropylene (PVDF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinyl pyridine, polyvinyl pyrrolidone, styrene-butadiene rubber, acrylonitrile-butadiene rubber, ethylenepropylene-diene monomer rubber (EPDM rubber), sulfonated EPDM, styrene-butylene rubber, fluoro-rubber, carboxymethyl cellulose (CMC), starch, hydroxypropyl cellulose, regenerated cellulose, or two or more of them.

The binder may be used generally in an amount of 1-50 parts by weight or 3-15 parts by weight, based on 100 parts by weight of the total weight of the positive electrode. When the content of the binder satisfies the above-defined range, it is possible to ensure he battery capacity with ease, while ensuring the adhesion of the positive electrode active material with the current collector.

The conductive material contained in the positive electrode is not particularly limited, as long as it has high electrical conductivity while not causing any side reaction under the internal environment of the electrochemical device and any chemical change in the corresponding battery, and graphite or conductive carbon may be used typically. Particular examples of the conductive material may include, but are not limited to: graphite, such as natural graphite or artificial graphite; carbon black, such as acetylene black, ketjen black, denka black, thermal black, channel black, furnace black, lamp black or thermal black; carbonaceous materials having a crystal structure of graphene or graphite; conductive fibers, such as carbon fibers or metal fibers; fluorocarbon; metal powder, such as aluminum powder or nickel powder; conductive whisker, such as zinc oxide or potassium titanate; conductive metal oxide, such as titanium oxide; and conductive polymers, such as polyphenylene derivatives; or two or more of them.

The conductive material may be added generally in an amount of 0.5-50 parts by weight or 1-30 parts by weight, based on 100 parts by weight of the total weight of the positive electrode. When the content of the conductive material satisfies the above-defined range, it is possible to improve the electrical conductivity with ease, to prevent degradation of the electrochemical characteristics with ease, and to ensure the capacity and energy density of the positive electrode with ease.

The method for incorporating the conductive material to the positive electrode is not particularly limited, and any method, including coating on the positive electrode active material, known to those skilled in the art may be used. In addition, if necessary, a second conductive coating layer may be added to the positive electrode active material to substitute for such addition of the conductive material.

In addition, a filler may be optionally added to the positive electrode according to the present disclosure, as an ingredient capable of inhibiting the positive electrode from swelling. Such a filler is not particularly limited, as long as it can inhibit the swelling of an electrode while not causing any chemical change in the corresponding battery. Particular examples of the filler may include: olefin-based polymers, such as polyethylene and polypropylene; fibrous materials, such as glass fibers and carbon fibers; or the like.

The positive electrode may be obtained by dispersing a positive electrode active material, a binder, a conductive material, or the like, to a dispersion medium (solvent), carrying out mixing to form a slurry, applying the slurry onto a positive electrode current collector, and carrying out drying and pressing. The dispersion medium may include N-methyl-2-pyrrolidone (NMP), dimethyl formamide (DMF), dimethyl sulfoxide (DMSO), ethanol, isopropanol, water and a mixture thereof, but is not limited thereto.

The positive electrode current collector may include platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), indium doped tin oxide (ITO; In doped SnO₂), fluorine doped tin oxide (FTO: F doped SnO₂) and alloys thereof, and aluminum (Al) or stainless steel surface-treated with carbon (C), nickel (Ni), titanium (Ti) or silver (Ag), or the like, but is not limited thereto. The positive electrode current collector may have various shapes, such as a film, a foil, a sheet, a punched material, a porous body, a foam, or the like.

The negative electrode is lithium metal, and may further include a current collector on one side of lithium metal. The current collector may be a negative electrode current collector. The negative electrode current collector is not particularly limited, as long as it has high conductivity while not causing any chemical change in the corresponding battery, and may be selected from the group consisting of copper, aluminum, stainless steel, zinc, titanium, silver, palladium, nickel, iron, chromium, alloys thereof and combinations thereof. Herein, stainless steel may be surface-treated with carbon, nickel, titanium or silver, and the alloy may include aluminum-cadmium alloy. Besides the above-listed current collectors, baked carbon, a non-conductive polymer surface-treated with a conductive material, conductive polymer, or the like, may also be used. In general, copper foil may be used as a negative electrode current collector.

In addition, the negative electrode current collector may have various shapes, such as a film, a sheet, a foil, a net, a porous body, a foam, a nonwoven fabric, or the like, optionally having fine surface irregularities. Further, the negative electrode current collector may have a thickness of 3-500 µm. When the thickness of the negative electrode current collector satisfies the above-defined range, it is possible to ensure the processability with ease even when the cell is assembled by a folding process, while ensuring a current collection effect.

Lithium metal may be lithium or a lithium alloy. Herein, the lithium alloy includes an element capable of forming an alloy with lithium. Particular examples of the alloy may include alloys of lithium with at least one element selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al.

Herein, lithium metal may have a sheet- or foil-like shape. Optionally, lithium metal may be provided in the form of a current collector on which lithium or a lithium alloy is deposited or coated through a dry process, or particle-shaped metal or alloy is deposited or coated through a wet process.

In general, a separator may be interposed between the positive electrode and the negative electrode. The separator is a physical separator functioning to separate both electrodes physically from each other, and any conventional separator may be used with no particular limitation. Particularly, the separator preferably shows low resistance against the electrolyte ion migration and high wettability with an electrolyte. In addition, the separator allows lithium-ion transport between the positive electrode and the negative electrode, while separating or insulating both electrodes from each other. Such a separator may include a porous and non-conductive or insulating material. The separator may be an independent member, such as a film, or a coating layer added to the positive electrode and/or negative electrode.

Particular examples of the polyolefin-based porous membrane that may be used as the separator may include membranes formed of polyolefin polymers including polyethylene, such as high-density polyethylene, linear low-density polyethylene, low-density polyethylene and ultrahigh-molecular weight polyethylene, polypropylene, polybutylene and polypentene, alone or in combination. Particular examples of the nonwoven fabric that may be used as the separator may include nonwoven fabrics formed of polyphenylene oxide, polyimide, polyamide, polycarbonate, polyethylene terephthalate, polyethylene naphthalate, polybutylene terephthalate, polyphenylene sulfide, polyacetal, polyethersulfone, polyetheretherketone, polyester, or the like, alone or in combination. Such a nonwoven fabric may include fibers forming a porous fabric, and particular examples of the fibers may include spunbond or meltblown type long fibers.

The thickness of the separator is not particularly limited, but may be 1-100 µm or 5-50 µm. When the thickness of the separator satisfies the above-defined range, it is possible to prevent the problem of degradation of the battery performance caused by the separator functioning as a resistance layer, while maintaining the mechanical properties. The pore size and porosity of the separator are not particularly limited, but may be 0.1-50 µm and 10-95%, respectively. When the pore size of the separator satisfies the above-defined range, it is possible to prevent the separator from functioning as a resistance layer and to maintain the mechanical properties of the separator with ease.

According to the present disclosure, tin chloride is used to improve the lithium intercalation/deintercalation efficiency and to inhibit the growth of dendrite, and contributes to enhancing the capacity and life of a battery by improving the lithium utilization efficiency.

According to the related art, lithium metal is dipped in a solvent containing a metal chloride dissolved therein to form a lithium alloy/Li-Cl protective layer on the surface of a lithium metal negative electrode.

However, such a method for forming a protective layer ex-situ has limitations of the non-uniformity of a lithium metal surface and low reactivity of metal chloride caused by the presence of a native oxide layer of the lithium metal surface, destruction of the protective layer in the initial stage of charge/discharge cycles, or the like.

Under these circumstances, the inventors of the present disclosure have found that the life of a battery can be improved by using tin chloride as an electrolyte additive. The present disclosure is based on this finding.

When tin chloride is contained as an electrolyte additive in a non-aqueous electrolyte, it is possible to overcome the low reactivity of lithium with tin chloride, caused by the native oxide layer of the lithium metal negative electrode surface.

According to an embodiment of the present disclosure, tin chloride may form a Li-Cl and Li-Sn alloy protective layer in situ on the surface of the lithium metal negative electrode during the initial charge/discharge process in which the native oxide layer of the lithium metal negative electrode surface is destroyed. In this manner, the Li-Cl and Li-Sn alloy protective layer may be incorporated to the lithium metal negative electrode.

Tin chloride contained in the non-aqueous electrolyte etches the native oxide layer of the lithium surface, having high interfacial resistance, during the initial charge/discharge process, thereby reducing the interfacial resistance between lithium and the electrolyte. Simultaneously, tin chloride reacts with the lithium metal negative electrode to form a lithium-affinitive Li-Cl and Li-Sn alloy protective layer on the surface of the lithium metal negative electrode. In this manner, it is possible to improve the lithium intercalation/deintercalation efficiency and to inhibit the growth of dendrite with ease. The Li-Cl and Li-Sn alloy protective layer functions as a stable electrode protecting layer which prevents the exhaustion of the salt and additive in the electrolyte. When the Li-Cl and Li-Sn alloy protective layer is incorporated to the surface of the lithium metal negative electrode, it is possible to improve the life of an electrochemical device with ease.

According to an embodiment of the present disclosure, the content of tin chloride may be 0.5-5 wt%, 0.7-5 wt%, 1-5 wt%, 0.7-4 wt%, 1-4 wt%, 1-3 wt%, or 1-2 wt%, based on 100 wt% of the total weight of the non-aqueous electrolyte. When the content of tin chloride satisfies the above-defined range, it is possible to realize the effect of improving the life of an electrochemical device with ease, while preventing the problem of rapid degradation of the battery, caused by the side reaction of tin chloride with the positive electrode active material. Particularly, when the content of tin chloride is 1-2 wt% based on 100 wt% of the total weight of the non-aqueous electrolyte, it is possible to improve the life of an electrochemical device to the highest degree.

According to an embodiment of the present disclosure, the non-aqueous electrolyte may further include: a first solvent including a heterocyclic compound having or not having at least one double bond, and containing at least one of oxygen and sulfur atoms; a second solvent including at least one of an ether-based compound, an ester-based compound, an amide-based compound and a carbonate-based compound; a lithium salt; and lithium nitrate.

Hereinafter, each of the first solvent, second solvent, lithium salt and lithium nitrate contained in the non-aqueous electrolyte according to an embodiment of the present disclosure will be explained in detail.

### First Solvent

The first solvent includes a heterocyclic compound having or not having at least one double bond, and containing at least one of oxygen and sulfur atoms, and has a difficulty in dissolving salt due to the delocalization of lone pair electrons of its heteroatom (oxygen or sulfur atom) in nature. Therefore, the first solvent can inhibit the formation of lithium dendrite by forming a polymer protective layer (solid electrolyte interphase (SEI) layer) on the surface of lithium metal through the ring opening polymerization reaction of the heterocyclic compound, and can improve the life characteristics of an electrochemical device by reducing the decomposition of the electrolyte on the lithium metal surface and side reactions caused thereby.

In other words, the heterocyclic compound according to the present disclosure may include at least one double bond in order to form a polymer protective layer on the lithium metal surface, and essentially includes at least one heteroatom (oxygen or sulfur atom) to impart polarity and to realize an effect of increasing the affinity with another solvent in the electrolyte, or the like.

The heterocyclic compound may be a 3- to 15-membered, 3- to 7-membered, or 5-to 6-membered heterocyclic compound. In addition, the heterocyclic compound may be a heterocyclic compound non-substituted or substituted with at least one selected from the group consisting of a C1-C4 alkyl group, a C3-C8 cyclic alkyl group, a C6-C10 aryl group, a halogen group, a nitro group (-NO₂), an amine group (-NH₂) and a sulfonyl group (-SO₂). In addition, the heterocyclic compound may be a polycyclic compound of at least one of a C3-C8 cyclic alkyl group and a C6-C10 aryl group with a heterocyclic compound.

When the heterocyclic compound is substituted with a C1-C4 alkyl group, radicals may be stabilized to inhibit the side reactions within the electrolyte. In addition, when the heterocyclic compound is substituted with a halogen or nitro group, it is possible to form a functional protective layer on the lithium metal surface, and the functional protective layer may function as a compact type protective layer. It is also possible to perform uniform deposition of lithium metal. Particularly, when the electrochemical device is a lithium-sulfur battery, it is possible to inhibit the side reactions between polysulfide and lithium metal.

Particular examples of the heterocyclic compound may include 1,3-dioxolane, 4,5-diethyl-dioxolane, 4,5-dimethyl-dioxolane, 4-methyl-1,3-dioxolane, 4-ethyl-1,3-dioxolane, 1,3-dioxane, 1,4-dioxane, 4-methyl-1,3-dioxane, 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimetylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or the like. The first solvent including such a heterocyclic compound may be present in an amount of 5-50 parts by volume (the balance corresponds to the second solvent), based on 100 parts by volume of the total organic solvent (i.e. the first solvent + the second solvent) contained in the non-aqueous electrolyte according to the present disclosure. When the content of the first solvent satisfies the above-defined range, it is possible to prevent the problem of incomplete formation of a protective layer on the lithium metal surface and to easily prevent the problem of degradation of the capacity and life of the battery, caused by an increase in resistance of the electrolyte and lithium metal surface.

Particularly, when the positive electrode active material is sulfur, it is possible to easily prevent the problem of a difficulty in inhibiting an increase in resistance of the electrolyte, caused by degradation of the ability of reducing the elution of polysulfide.

### Second Solvent

The second solvent includes at least one selected from an ether-based compound, an ester-based compound, an amide-based compound and a carbonate-based compound, and may function to provide the electrolyte with lithium-ion conductivity by dissolving a lithium salt and to allows elution of the positive electrode active material to facilitate the electrochemical reaction with lithium. Particularly, when the positive electrode active material is sulfur, the second solvent may function to allow elution of sulfur as a positive electrode active material to facilitate the electrochemical reaction with lithium.

The carbonate-based compound may include a linear carbonate-based compound or a cyclic carbonate-based compound.

Particular examples of the ether-based compound may include, but are not limited to: dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, or two or more of them.

In addition, particular examples of the ester-based compound may include, but are not limited to: methyl acetate, ethyl acetate, propyl acetate, methyl propionate, ethyl propionate, propyl propionate, γ-butyrolactone, γ-valerolactone, γ-caprolactone, σ-valerolactone, ε-caprolactone, or two or more of them.

The amide-based compound may be a conventional amide-based compound used currently in the art.

Particular examples of the linear carbonate-based compound may include, but are not limited to: dimethyl carbonate (DMC), diethyl carbonate (DEC), dipropyl carbonate (DPC), ethyl methyl carbonate (EMC), methyl propyl carbonate (MPC), ethyl propyl carbonate (EPC), or a mixture of two or more of them.

Particular examples of the cyclic carbonate-based compound may include, but are not limited to: ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, halides thereof (fluoroethylene carbonate (FEC), etc.), or two or more of them.

The second solvent may be present in an amount of 50-95 parts by volume based on 100 parts by volume of the total organic solvent (i.e. the first solvent + the second solvent) contained in the non-aqueous electrolyte according to an embodiment of the present disclosure. When the content of the second solvent satisfies the above-defined range, it is possible to dissolve the lithium salt sufficiently, and thus to easily prevent the problem of degradation of the lithium-ion conductivity. It is also possible to easily prevent the problem of precipitation of the positive electrode active material resulting from exceeding the soluble concentration thereof. Particularly, when the positive electrode active material is sulfur, it is possible to easily prevent the problem of precipitation of sulfur, resulting from exceeding the soluble concentration of sulfur as the positive electrode active material. It is also possible to easily prevent the problem of excessive elution of sulfur leading to a severe shuttle phenomenon of lithium polysulfide and the lithium metal negative electrode and degradation of the life of an electrochemical device.

Meanwhile, the organic solvent including the first solvent and the second solvent may be present in an amount of 60-99.5 wt%, 60-99 wt%, 60-98 wt%, or 60-95 wt%, based on 100 wt% of the total weight of the non-aqueous electrolyte according to an embodiment of the present disclosure. When the content of the organic solvent satisfies the above-defined range, it is possible to easily prevent the problem of an increase in viscosity of the electrolyte and a decrease in ion conductivity or the problem of incomplete dissolution of the lithium salt or additive in the electrolyte, and to easily prevent the problem of a decrease in ion conductivity caused by a decrease in lithium salt concentration in the electrolyte.

### Lithium Salt

The lithium salt is an electrolyte salt used to increase the ion conductivity, and particular examples thereof may include LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, lithium chloroborate, lithium C4 or lower aliphatic carboxylate, lithium 4-phenylborate, lithium imide, or two or more of them. Particularly, use of (CF₃SO₂)₂NLi or (SO₂F)₂NLi is advantageous in terms of high solubility to the first solvent and/or second solvent and high lithium-ion conductivity.

The concentration of lithium salt may be determined considering the ion conductivity, or the like. For example, the lithium salt concentration may be 0.2-2 M, or 0.5-1 M. When the lithium salt concentration satisfies the above-defined range, it is possible to easily ensure ion conductivity suitable for the operation of a battery and to prevent degradation of lithium-ion transportability caused by an increase in viscosity of the electrolyte or an increase in decomposition of the lithium salt itself.

### Lithium Nitrate

The non-aqueous electrolyte according to an embodiment of the present disclosure may include lithium nitrate (LiNO₃). Lithium nitrate reacts with the lithium metal negative electrode to form a lithium-affinitive protective layer, such as lithium nitride (Li₃N) or lithium oxynitride (LiON), on the lithium metal negative electrode surface to inhibit the growth of lithium dendrite and to prevent the decomposition of electrolyte ingredients, thereby providing a battery with improved life and efficiency.

In addition, if necessary, the non-aqueous electrolyte may further include lanthanum nitrate (La(NO₃)₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂), or two or more of them.

Lithium nitrate may be present in an amount of 0.1-7 wt%, 0.5-5 wt%, or 0.5-1.5 wt%, based on 100 wt% of the total weight of the non-aqueous electrolyte. When the content of lithium nitrate satisfies the above-defined range, it is possible to easily prevent the problem of a rapid decrease in coulombic efficiency and to prevent an increase in viscosity of the electrolyte.

The non-aqueous electrolyte according to an embodiment of the present disclosure may include 1,3-dioxolane as the first solvent, dimethoxyethane as the second solvent, (CF₃SO₂)₂NLi as the lithium salt, lithium nitrate and tin chloride. Particularly, 1,3-dioxolane and dimethoxyethane have high lithium polysulfide solubility and can stabilize the lithium metal negative electrode. Therefore, when the non-aqueous electrolyte includes the above-listed ingredients, it is possible to allow an electrochemical device to realize optimized characteristics.

According to the present disclosure, the electrochemical device may include any device which carries out electrochemical reaction, and particular examples thereof may include all types of primary batteries, secondary batteries, fuel cells, solar cells or capacitors, such as super capacitor devices.

According to an embodiment of the present disclosure, the electrochemical device may be any lithium secondary battery using lithium metal as a negative electrode and used conventionally in the art, and particularly, may be a lithium-sulfur battery or a lithium-lithium symmetric cell.

The electrochemical device including the positive electrode, negative electrode, separator and electrolyte according to an embodiment of the present disclosure may be obtained by a process including allowing the positive electrode and the negative electrode to face each other, interposing the separator therebetween, and injecting the non-aqueous electrolyte according to an embodiment of the present disclosure thereto.

Meanwhile, the lithium secondary battery according to an embodiment of the present disclosure may be used applied to a battery cell used as a power source of a small-scale device but also may be used suitably as a unit cell of a battery module which is a power source of a middle- to large-scale device. In this context, the present disclosure also provides a battery module including two or more electrochemical devices connected electrically (in series or in parallel). The number of electrochemical devices contained in the battery module may be controlled diversely considering the use and capacity of the battery module, or the like. Further, the present disclosure provides a battery pack including the battery modules connected electrically according to the general technology known to those skilled in the art. The battery module and battery pack may be used as a power source of at least one middle- to large-scale device selected from: power tools; electric cars, including electric vehicles (EVs), hybrid electric vehicles (HEVs), plug-in hybrid electric vehicles (PHEVs), or the like; electric trucks; electric commercial vehicles; electric power storage systems; or the like, but is not limited thereto.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1-1

First, an organic solvent was prepared by mixing 1,3-dioxolane (first solvent) and dimethoxyethane (second solvent) at a volume ratio (v/v) of 1:1. Then, a non-aqueous electrolyte was prepared by introducing 1 wt% of lithium nitrate and 0.5 wt% of tin chloride to the organic solvent based on the total weight of electrolyte and dissolving (CF₃SO₂)₂NLi (LiTFSI) therein to a concentration of 1 M.

### Example 1-2

A non-aqueous electrolyte was prepared in the same manner as Example 1-1, except that 1 wt% of tin chloride was added instead of 0.5 wt% of tin chloride.

### Example 1-3

A non-aqueous electrolyte was prepared in the same manner as Example 1-1, except that 2 wt% of tin chloride was added instead of 0.5 wt% of tin chloride.

### Example 1-4

A non-aqueous electrolyte was prepared in the same manner as Example 1-1, except that 3 wt% of tin chloride was added instead of 0.5 wt% of tin chloride.

### Example 1-5

A non-aqueous electrolyte was prepared in the same manner as Example 1-1, except that 4 wt% of tin chloride was added instead of 0.5 wt% of tin chloride.

### Example 1-6

A non-aqueous electrolyte was prepared in the same manner as Example 1-1, except that 5 wt% of tin chloride was added instead of 0.5 wt% of tin chloride.

### Comparative Example 1-1

A non-aqueous electrolyte was prepared in the same manner as Example 1-1, except that tin chloride was not added.

### Examples 2-1 to 2-6 and Comparative Example 2-1: Manufacture of Lithium-Lithium Symmetric Cell

Two electrodes including lithium pressed on one surface of a copper current collector to a thickness of 35 µm were prepared and used as a positive electrode and a negative electrode, wherein both electrodes were located in such a manner that lithium sides might face each other. Then, a porous polyethylene (PE) separator having a thickness of 16 µm was interposed between the positive electrode and the negative electrode, and the non-aqueous electrolyte according to each of Examples 1-1 to 1-6 and Comparative Example 1-1 was injected thereto, followed by sealing, to obtain a coin cell-type lithium-lithium symmetric cell.

### Examples 3-1 to 3-6 and Comparative Example 3-1: Manufacture of Lithium-Sulfur Battery

First, 87.5 parts by weight of sulfur-carbon (carbon nanotubes, CNTs) composite (S/C 75:25 weight ratio) as a positive electrode active material, 5 parts by weight of denka black as a conductive material, and 7.5 parts by weight of styrene butadiene rubber/carboxymethyl cellulose (SBR/CMC, 7:3) as a binder were mixed to prepare a positive electrode slurry composition, and the slurry composition was applied to one surface of a current collector (Al foil) and dried at 80°C, followed by pressing with a roll press machine, to obtain a positive electrode (wherein the positive electrode had a loading amount of 4 mg/cm²).

Then, the positive electrode was allowed to face a negative electrode including lithium pressed on one surface of a copper current collector to a thickness of 35 µm, a porous polyethylene (PE) separator was interposed between both electrodes, and the non-aqueous electrolyte according to each of Examples 1-1 to 1-6 and Comparative Example 1-1 was injected thereto, followed by sealing, to obtain a coin cell-type lithium-sulfur battery.

### Test Example 1: Evaluation of Interfacial Resistance and Cycle Life of Lithium-Lithium Symmetric Cell

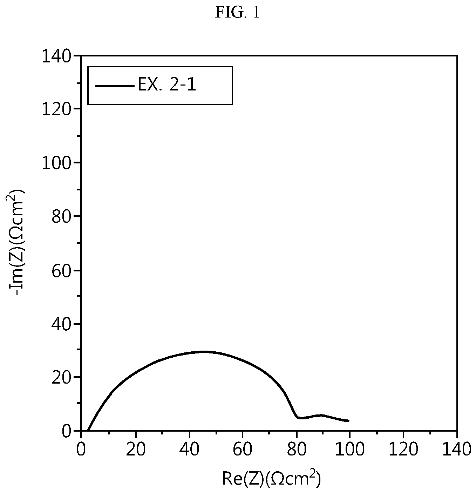

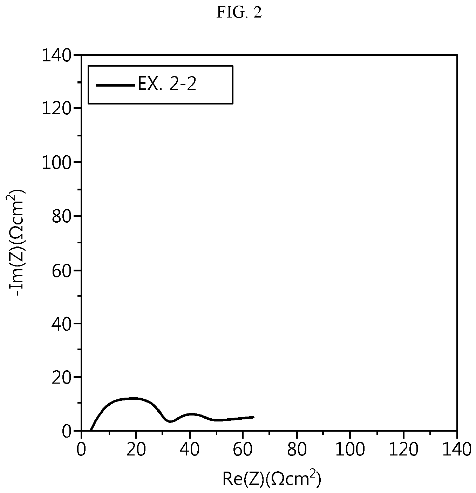

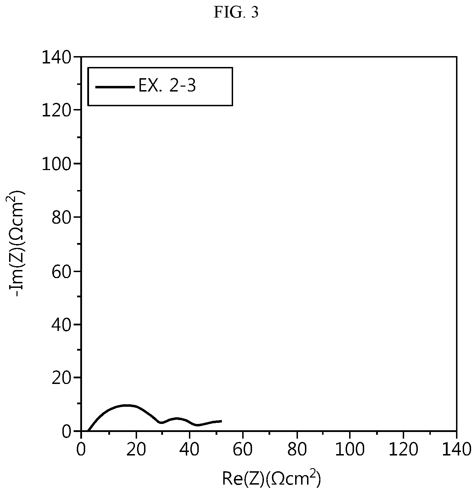

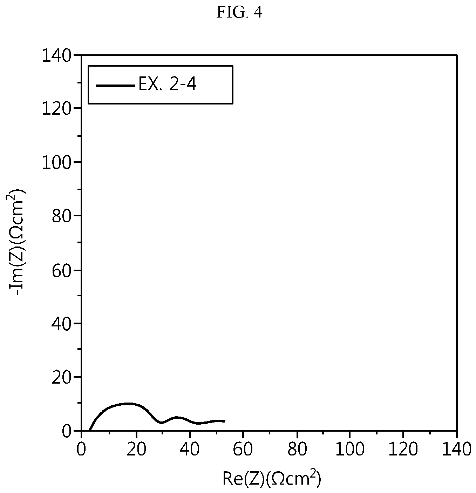

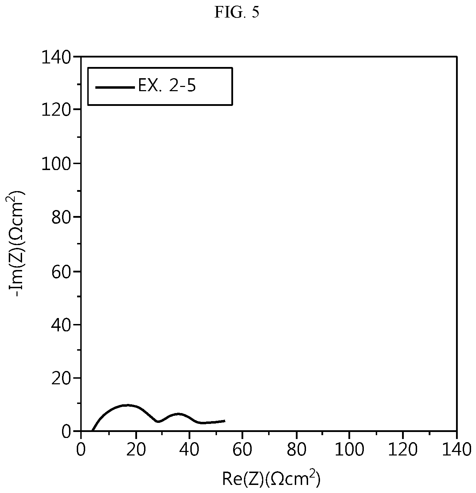

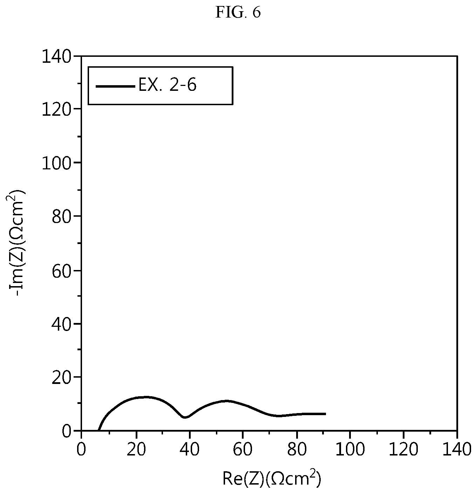

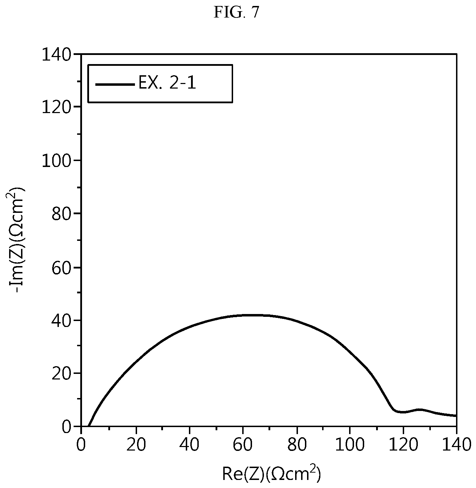

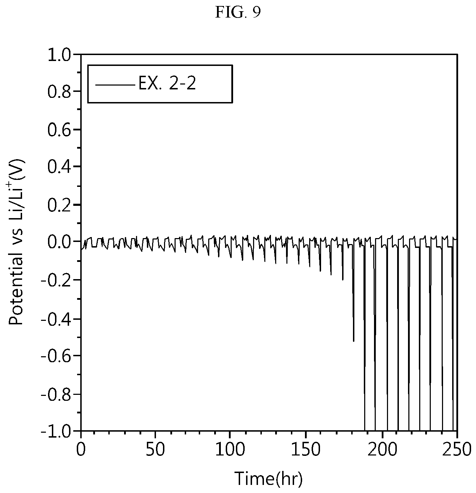

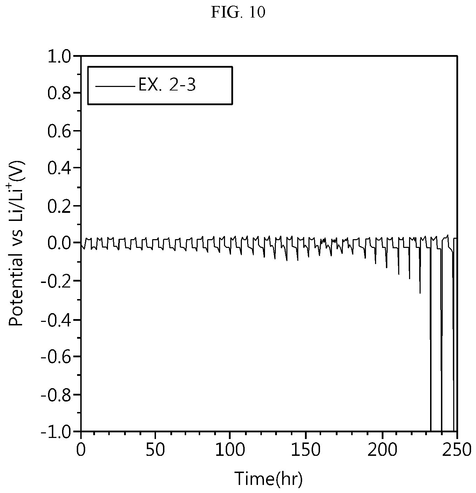

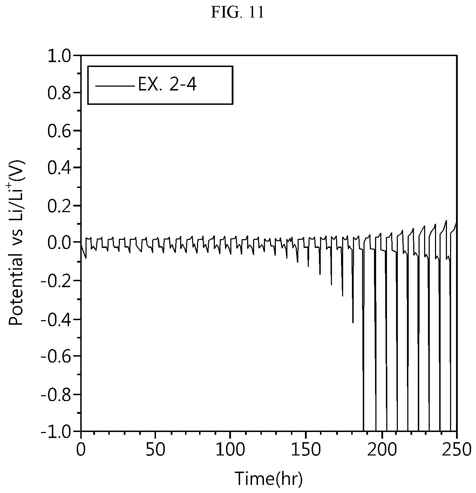

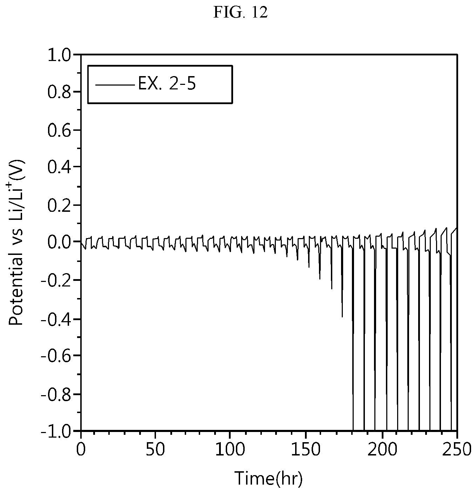

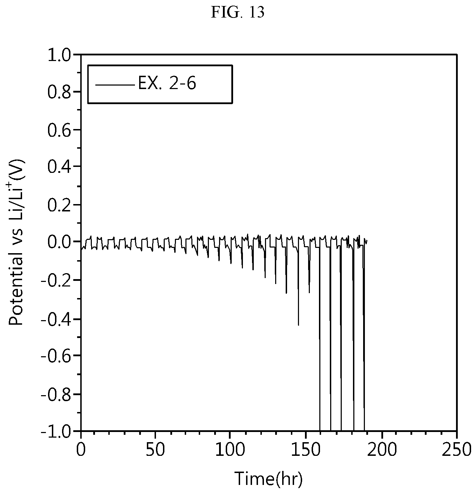

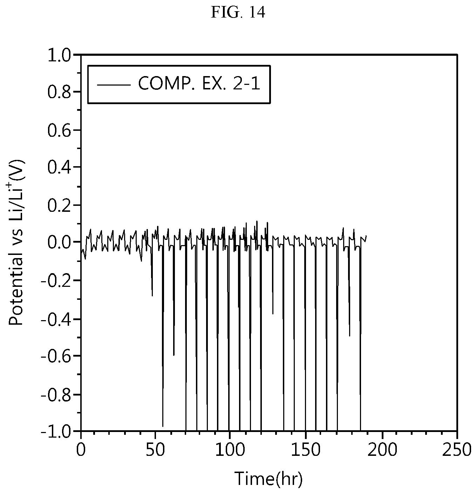

The lithium-lithium symmetric cell according to each of Examples 2-1 to 2-6 and Comparative Example 2-1 was evaluated in terms of the interfacial resistance and cycle life. The results are shown in the following Table 1 and FIGS. 1-14.

The interfacial resistance of the lithium-lithium symmetric cell was determined by measuring the impedance of the lithium-lithium symmetric cell according to each of Examples 2-1 to 2-6 and Comparative Example 2-1 by using electrochemical impedance spectroscopy (EIS) at a temperature of 25°C in a frequency range of 0.1 Hz to 1 MHz, wherein the radius of the first semi-circle was defined as interfacial resistance R.

The cycle life of the lithium-lithium symmetric cell was determined by measuring the potential depending on time (cycle), while allowing the lithium-lithium symmetric cell according to each of Examples 2-1 to 2-6 and Comparative Example 2-1 to repeat charge/discharge cycles (charge cut-off voltage: +1 V, discharge cut-off voltage: -1 V) at a temperature of 25°C and a current density of 1.5 mA/cm².

**[Table 1]**

| | Content of SnCh in electrolyte (wt%) | Interfacial resistance (R) (Ωcm²) | Life (cycles) [based on reaching -1 V] |
|---|---|---|---|
| Example 2-1 | 0.5 | 39 | 18 |
| Example 2-2 | 1 | 15 | 26 |
| Example 2-3 | 2 | 13 | 33 |
| Example 2-4 | 3 | 13 | 26 |
| Example 2-5 | 4 | 14 | 25 |
| Example 2-6 | 5 | 18 | 13 |
| Comparative Example 2-1 | - | 59 | 10 |

As can be seen from Table 1 and FIGS. 1-7, the lithium-lithium symmetric cell including tin chloride in the electrolyte according to each of Examples 2-1 to 2-6 shows a reduced interfacial resistance, as compared to the lithium-lithium symmetric cell including no tin chloride in the electrolyte according to Comparative Example 2-1. This is because the native oxide layer of the lithium metal negative electrode surface having high interfacial resistance is etched by tin chloride, and a lithium-affinitive Li-Cl and Li-Sn alloy protective layer is formed on the lithium metal negative electrode surface.

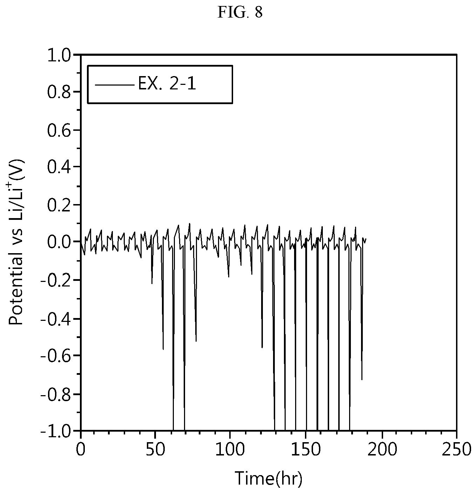

In addition, as can be seen from Table 1 and FIGS. 8-14, the lithium-lithium symmetric cell including tin chloride in the electrolyte according to each of Examples 2-1 to 2-6 shows improved life, as compared to the lithium-lithium symmetric cell including no tin chloride in the electrolyte according to Comparative Example 2-1. Particularly, in the case of the lithium-lithium symmetric cell using a content of tin chloride of 0.5-4 wt% based on 100 wt% of the total weight of the electrolyte according to each of Examples 2-1 to 2-5, it can be seen that the cell shows more improved life.

### Test Example 2: Evaluation of Cycle Life of Lithium-Sulfur Battery

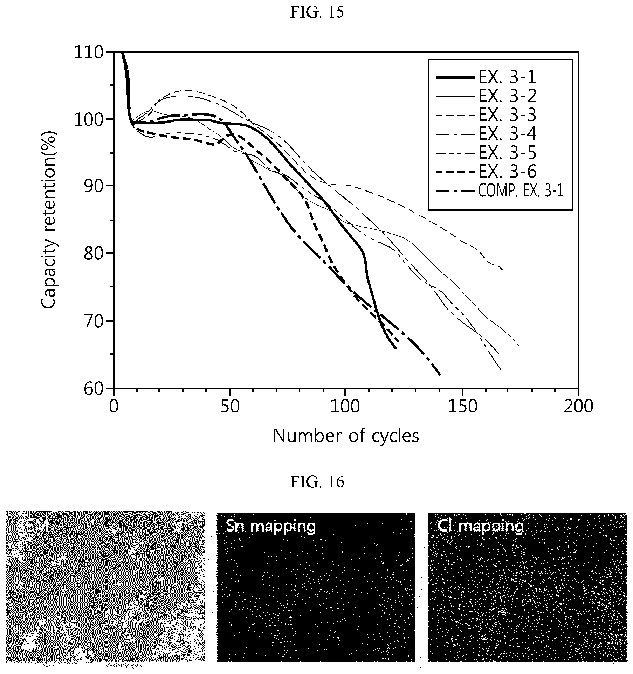

The lithium-sulfur battery according to each of Examples 3-1 to 3-6 and Comparative Example 3-1 was evaluated in terms of capacity-potential depending on charge/discharge cycle number by carrying out 0.2 C charge/0.3 C discharge cycles in a constant current (CC) mode at a temperature of 25°C in a voltage range of 1.8-2.5 V (each battery was operated at 0.3 C/0.5 C from the seventh cycle after subjecting the battery to a stabilization process of the initial 0.1 C/0.1 C 2.5 cycles and 0.2 C/0.2 C 3 cycles). The results are shown in the following Table 2 and FIG. 15.

**[Table 2]**

| | Content of SnCh in electrolyte (wt%) | Life (cycles) [based on 80% of discharge capacity] |
|---|---|---|
| Example 3-1 | 0.5 | 107 |
| Example 3-2 | 1 | 132 |
| Example 3-3 | 2 | 157 |
| Example 3-4 | 3 | 123 |
| Example 3-5 | 4 | 121 |
| Example 3-6 | 5 | 91 |
| Comparative Example 3-1 | - | 86 |

As can be seen from Table 2 and FIG. 15, the lithium-sulfur battery including tin chloride in the electrolyte according to each of Examples 3-1 to 3-6 shows improved life, as compared to the lithium-sulfur battery including no tin chloride in the electrolyte according to Comparative Example 3-1. Particularly, in the case of the lithium-sulfur battery using a content of tin chloride of 0.5-4 wt% based on 100 wt% of the total weight of the electrolyte according to each of Examples 3-1 to 3-5, it can be seen that the battery shows more improved life. More particularly, in the case of the lithium-sulfur battery using a content of tin chloride of 1 wt% based on 100 wt% of the total weight of the electrolyte according to Example 3-2, the battery shows significantly improved life. It can be also seen that the lithium-sulfur battery using a content of tin chloride of 2 wt% based on 100 wt% of the total weight of the electrolyte according to Example 3-3 shows the highest life.

### Test Example 3: Surface Analysis of Lithium Metal Negative Electrode of Lithium-Sulfur Battery

After the lithium-sulfur battery according to Example 3-3 was operated for 100 cycles, the surface of the lithium metal negative electrode of the lithium-sulfur battery was analyzed by using scanning electron microscopy (SEM)-energy dispersive spectroscopy (EDS). The result is shown in FIG. 16.

As can be seen from FIG. 16, Sn and Cl are detected on the surface of the negative electrode even after operating the battery. This suggests that the Li-Cl and Li-Sn alloy protective layer is present on the surface of the lithium metal negative electrode even after operating the battery.

## Claims

1. An electrochemical device comprising: a positive electrode; a lithium metal negative electrode; a separator interposed between the positive electrode and the negative electrode; and a non-aqueous electrolyte containing tin chloride (SnCh).

2. The electrochemical device according to claim 1, wherein the content of tin chloride is 0.5-5 wt% based on 100 wt% of the total weight of the non-aqueous electrolyte.

3. The electrochemical device according to claim 1, wherein the content of tin chloride is 1-4 wt% based on 100 wt% of the total weight of the non-aqueous electrolyte.

4. The electrochemical device according to claim 1, wherein the lithium metal negative electrode comprises a Li-Cl and Li-Sn alloy protective layer on the surface thereof.

5. The electrochemical device according to claim 1, wherein the non-aqueous electrolyte further comprises:
a first solvent comprising a heterocyclic compound having or not having at least one double bond, and containing at least one of oxygen and sulfur atoms;
a second solvent comprising at least one of an ether-based compound, an ester-based compound, an amide-based compound and a carbonate-based compound;
a lithium salt; and
lithium nitrate.

6. The electrochemical device according to claim 5, wherein the lithium salt comprises one of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, (SO₂F)₂NLi, (CF₃SO₂)₂NLi, (CF₃SO₂)₃CLi, lithium chloroborate, lithium C4 or lower aliphatic carboxylate, lithium 4-phenylborate and lithium imide, or two or more of them.

7. The electrochemical device according to claim 5, wherein the lithium salt has a concentration of 0.2-2.0 M.

8. The electrochemical device according to claim 5, wherein the heterocyclic compound is a 3- to 15-membered cyclic compound non-substituted or substituted with at least one selected from the group consisting of a C1-C4 alkyl group, a C3-C8 cyclic alkyl group, a C6-C10 aryl group, a halogen group, a nitro group, an amine group and a sulfonyl group, or a polycyclic compound of at least one of a C3-C8 cyclic alkyl group and a C6-C10 aryl group with a heterocyclic compound.

9. The electrochemical device according to claim 5, wherein the heterocyclic compound comprises one of 1,3-dioxolane, 4,5-diethyl-dioxolane, 4,5-dimethyl-dioxolane, 4-methyl-1,3-dioxolane, 4-ethyl-1,3-dioxolane, 1,3-dioxane, 1,4-dioxane, 4-methyl-1,3-dioxane, 2-methyl-1,3-dioxane, furan, 2-methylfuran, 3-methylfuran, 2-ethylfuran, 2-propylfuran, 2-butylfuran, 2,3-dimethylfuran, 2,4-dimethylfuran, 2,5-dimetylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene, or two or more of them.

10. The electrochemical device according to claim 5, wherein the ether-based compound of the second solvent comprises one of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether, or two or more of them.

11. The electrochemical device according to claim 1, wherein the non-aqueous electrolyte further comprises one of lanthanum nitrate, potassium nitrate, cesium nitrate, magnesium nitrate, barium nitrate, lithium nitrite, potassium nitrite and cesium nitrite, or two or more of them.

12. The electrochemical device according to claim 1, wherein the non-aqueous electrolyte further comprises 1,3-dioxolane as the first solvent, dimethoxyethane as the second solvent, (CF₃SO₂)₂NLi as the lithium salt, and lithium nitrate.

13. The electrochemical device according to claim 1, which is a lithium-sulfur battery.

14. The electrochemical device according to claim 1, which is a lithium-lithium symmetric cell.
